# EUROPÄISCHE PATENTSCHRIFT

(11) **EP 3 155 247 B1**
(45) Veröffentlichungstag und Bekanntmachung des Hinweises auf die Patenterteilung: **19.09.2018**
(21) Anmeldenummer: 15727669.2
(22) Anmeldetag: 10.06.2015
(51) Int. Cl.: F02D 13/02

(54) **VERFAHREN UND STEUEREINHEIT ZUM AUSFÜHREN EINES GASWECHSELS IN EINEM ZYLINDER EINER VERBRENNUNGSKRAFTMASCHINE SOWIE VERBRENNUNGSKRAFTMASCHINE MIT EINER SOLCHEN STEUEREINHEIT**
METHOD AND CONTROL UNIT FOR CARRYING OUT A GAS EXCHANGE IN A CYLINDER OF AN INTERNAL COMBUSTION ENGINE AND INTERNAL COMBUSTION ENGINE HAVING SUCH A CONTROL UNIT
PROCÉDÉ ET UNITÉ DE COMMANDE POUR RÉALISER UN ÉCHANGE GAZEUX DANS UN CYLINDRE D'UN MOTEUR À COMBUSTION INTERNE ET MOTEUR À COMBUSTION INTERNE ÉQUIPÉ D'UNE TELLE UNITÉ DE COMMANDE

(30) Priorität: 11.06.2014 DE 102014211160
(43) Veröffentlichungstag der Anmeldung: 19.04.2017
(73) Patentinhaber: Volkswagen Aktiengesellschaft, 38440 Wolfsburg (DE)
(72) Erfinder: KLEINHANS, René, 29399 Warenholz (DE); KLIE, Stefan, 38102 Braunschweig (DE); GARWON, Maiko, 38116 Braunschweig (DE); BECKMANN, Robert, 22301 Hamburg (DE)
(86) Internationale Anmeldenummer: PCT/EP2015/062914
(87) Internationale Veröffentlichungsnummer: WO 2015/189256

(56) Entgegenhaltungen:
- EP-A1- 2 878 791
- WO-A1-2014/016926
- US-A1- 2015 128 904

## Beschreibung

Die Erfindung betrifft ein Verfahren und eine Steuereinheit zum Ausführen eines Gaswechsels in einem Zylinder einer Verbrennungskraftmaschine. Weiterhin betrifft die Erfindung eine Verbrennungskraftmaschine mit einer solchen Steuereinheit sowie ein Kraftfahrzeug mit einer solchen Verbrennungskraftmaschine.

Bei Verbrennungskraftmaschinen kommt es nach jedem Verbrennungsvorgang zu einem Gaswechsel. Die Art und Weise, wie dieser Gaswechsel durchgeführt wird, beeinflusst den Kraftstoffverbrauch und den Schadstoffausstoß der Verbrennungskraftmaschine wesentlich. Es ist daher notwendig, den Gaswechsel so zu gestalten, dass eine Zylinderfüllung bestimmte Anteile an Frischluft, Restgas und Spülluft enthält.

Bei einem Viertaktmotor werden üblicherweise die vier Prozessschritte Ansaugen, Verdichten, Verbrennen und Ausstoßen durchlaufen. Bei einem herkömmlichen Otto-Motor wird das Einlassventil beim Ansaugen, kurz bevor der Kolben einen oberen Totpunkt erreicht, geöffnet, wobei das Auslassventil geöffnet bleibt. Nach Durchlaufen des oberen Totpunkts wird das Auslassventil geschlossen. Erst, nachdem der Kolben den unteren Totpunkt erreicht hat, wird das Einlassventil wieder geschlossen. Ein Verbrennungsmotor, der auf dem Miller-Prinzip basiert unterscheidet sich vom Otto-Motor darin, dass das Einlassventil im Vergleich zum Otto-Motor sehr früh schließt, wodurch die Luftmenge im Zylinder verringert ist. Dadurch, dass das Einlassventil bereits vor Erreichen des unteren Totpunkts geschlossen wird, wird das Expansionsvolumen vergrößert, ohne dass der Verdichtungsdruck erhöht wird, wodurch Kraftstoff eingespart wird und die Temperatur im Zylinder geringer als in einem Otto-Motor ist.

Zum Steuern der Anteile an Frischluft, Restgas und Spülluft der Zylinderfüllung gibt es verschiedene Möglichkeiten. So ist es beispielsweise bekannt, die Füllung des Zylinders durch Verstellen einer Drosselklappe im Saugrohr, wodurch der Saugrohrdruck geändert wird, in geeigneter Weise zu regeln. Aufgrund des großen Volumens des Saugrohrs stellen sich Druckänderungen jedoch nur verzögert ein, so dass eine Füllungssteuerung über die Drosselklappe träge ist. Alternativ gibt es verschiedene Ansätze, bei denen die Zylinderfüllung über den Ventiltrieb gesteuert wird. Eine solche Füllungssteuerung setzt jedoch voraus, dass die Druckverhältnisse im Saugrohr sowie im Krümmer genau bekannt sind. Dies ist hinsichtlich des Abgasgegendrucks im Auslasskanal bzw. im Krümmer, der einen nichtvernachlässigbaren Einfluss auf die Zylinderfüllung hat, nicht ohne Weiteres möglich.
Die WO 2014/16926 A1 beschreibt ein Verfahren zum Aufladen eines Motors. Dabei werden infolge einer Momentenanforderung mittels eines Kennfeldes Öffnungs- und Verschlusszeiten eines Einlassventils auf Basis des Saugrohrdrucks bestimmt und auf Grundlage der Öffnungs- und Verschlusszeiten des Einlassventils wird ein Soll-Saugrohrdruck bestimmt. Dieser liegt dann der Bestimmung der Einstellung der Drosselklappe und des Auslassventils zugrunde.
Aufgabe der vorliegenden Erfindung ist es, ein Verfahren und eine Steuereinheit zum Ausführen eines Gaswechsels in einem Zylinder einer Verbrennungskraftmaschine sowie eine Verbrennungskraftmaschine mit einer solchen Steuereinheit bereitzustellen, die die oben genannten Nachteile wenigstens teilweise überwinden.
Diese Aufgabe wird durch das erfindungsgemäße Verfahren nach Anspruch 1, die erfindungsgemäße Steuereinheit nach Anspruch 12 und die Verbrennungskraftmaschine nach Anspruch 14 gelöst.
Ein Ausführungsbeispiel eines Verfahrens zum Ausführen eines Gaswechsels in einem Zylinder einer Verbrennungskraftmaschine, wobei der Zylinder über ein Ventil mit einem Gasleitungsabschnitt verbunden ist, in dem ein Stellorgan zum Einstellen eines Gasdrucks in dem Gasleitungsabschnitt vorgesehen ist, wobei das Ventil bei gleichbleibendem Moment der Verbrennungskraftmaschine zu einem festen Zeitpunkt in einem Arbeitszyklus der Verbrennungskraftmaschine schließt, enthält die Schritte:
Erkennen einer Momentänderungsaufforderung;
Bestimmen eines Sollwerts bezüglich des Gasdrucks im Gasleitungsabschnitt in Abhängigkeit von der Momentänderungsaufforderung; und
Bestimmen eines variablen Zeitpunktes zum Schließen des Ventils infolge der Momentänderungsaufforderung, wobei der variable Zeitpunkt im Arbeitszyklus in Abhängigkeit vom Sollwert des Gasdrucks relativ zu dem festen Zeitpunkt verschoben ist.

Ein Ausführungsbeispiel einer Steuereinheit zum Ausführen eines Gaswechsels in einem Zylinder einer Verbrennungskraftmaschine, insbesondere des erwähnten Verfahrens, wobei der Zylinder über ein Ventil mit einem Gasleitungs-abschnitt verbunden ist, in dem ein Stellorgan zum Einstellen eines Gasdrucks in dem Gasleitungsabschnitt vorgesehen ist, wobei das Ventil bei gleichbleibendem Moment der Verbrennungskraftmaschine zu einem festen Zeitpunkt in einem Arbeitszyklus der Verbrennungskraftmaschine schließt, enthält:
eine Schnittstelle zum Empfangen einer Momentänderungsaufforderung; und
ein Prozessormodul
zum Bestimmen eines Sollwerts bezüglich des Gasdrucks im Gasleitungsabschnitt in Abhängigkeit von der Momentänderungsaufforderung; und
zum Bestimmen eines variablen Zeitpunktes zum Schließen des Ventils infolge der Momentänderungsaufforderung, wobei der variable Zeitpunkt im Arbeitszyklus in Abhängigkeit vom Sollwert des Gasdrucks relativ zu dem festen Zeitpunkt verschoben ist.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Verfahren zum Ausführen eines Gaswechsels in einem Zylinder einer Verbrennungskraftmaschine basiert auf einer Ausgestaltung der Verbrennungskraftmaschine, bei der der Zylinder über ein Ventil mit einem Gasleitungsabschnitt verbunden ist, in dem ein Stellorgan zum Einstellen eines Gasdrucks in dem Gasleitungsabschnitt vorgesehen ist. Das Ventil ist so gesteuert, dass es bei gleichbleibendem Moment der Verbrennungskraftmaschine zu einem festen Zeitpunkt in einem Arbeitszyklus der Verbrennungskraftmaschine schließt. Gemäß dem erfindungsgemäßen Verfahren wird zunächst eine Momentänderungsaufforderung erkannt. Nach dem Erkennen der Momentänderungsaufforderung wird ein Sollwert bezüglich des Gasdrucks im Gasleitungsabschnitt in Abhängigkeit von der Momentänderungsaufforderung bestimmt. Gemäß einem nachfolgenden Schritt des erfindungsgemäßen Verfahrens wird ein variabler Zeitpunkt zum Schließen des Ventils infolge der Momentänderungsaufforderung bestimmt. Der variable Zeitpunkt im Arbeitszyklus ist dabei in Abhängigkeit vom Sollwert des Gasdrucks relativ zu dem festen Zeitpunkt verschoben.

Der feste Zeitpunkt ist der Zeitpunkt im Arbeitszyklus der Verbrennungskraftmaschine, an dem das Ventil schließt, wenn sich die Verbrennungskraftmaschine in einer Art Gleichgewichtszustand befindet, d.h. wenn das Moment der Verbrennungskraftmaschine und Zustandsgrößen wie die Drücke und Temperaturen in der Verbrennungskraftmaschine im Wesentlichen konstant gehalten werden.

In manchen Ausführungsbeispielen kann das Ventil ein Einlassventil und der Gasdruck ein Saugrohrdruck sein. Dann kann der feste Zeitpunkt ein Zeitpunkt sein, an dem sich ein Kolben der Verbrennungskraftmaschine in einer Stellung befindet, in der ein Zylindervolumen noch nicht maximal ist, d.h. in der der Kolben den unteren Totpunkt noch nicht erreicht hat. Mit anderen Worten kann der feste Zeitpunkt der Zeitpunkt sein, an dem das Einlassventil bei Ausführung des Miller-Verfahrens, wenn keine Momentänderungsaufforderung vorhanden ist, schließt.

In manchen Ausführungsbeispielen kann das Ventil ein Auslassventil und der Gasdruck ein Abgasgegendruck sein. Dann kann der feste Zeitpunkt ein Zeitpunkt sein, an dem sich ein Kolben der Verbrennungskraftmaschine in einer Stellung befindet, in der ein Zylindervolumen minimal ist oder gerade nicht mehr minimal ist, d.h. in der der Kolben am oberen Totpunkt ist oder den oberen Totpunkt gerade passiert hat.

In manchen Ausführungsbeispielen kann der feste Zeitpunkt auf Grundlage eines Füllungserfassungsmodells bestimmt werden. Zur Erzeugung des Füllungserfassungsmodells können Messwerte, die an einem Prüfstand gemessen wurden, und/oder Simulationswerte bezüglich einer oder mehrerer Zustandsgrößen der Verbrennungskraftmaschine herangezogen werden. Abhängig von den Werten der Zustandsgrößen, beispielsweise den Druckverhältnissen, kann der feste Zeitpunkt unterschiedlich gewählt sein. In diesen Ausführungsbeispielen kann bei einer Momentänderungsaufforderung der Schaltzeitpunkt relativ zu einem z.B. zuletzt bestimmten festen Zeitpunkt verschoben sein.

Die Momentänderungsaufforderung kann beispielsweise ein angefordertes Sollmoment umfassen.

Die Momentänderungsaufforderung kann beispielsweise ein Befehl einer Steuereinheit sein. Dieser kann z.B. durch Setzen eines Bits ausgegeben werden und durch Auslesen des Bit erkannt werden. Bei einem Kraftfahrzeug kann die Momentänderungsaufforderung z.B. ein Befehl der Motorsteuerung (engine control unit - ECU) zur Erhöhung eines Motormoments sein, der infolge einer Betätigung des Gaspedals von der Motorsteuerung ausgesendet wird.

Ein Maß der Verschiebung des variablen Zeitpunkts im Arbeitszyklus kann weiterhin von einem Istwert des Gasdrucks abhängen. Daher kann der variable Zeitpunkt im Arbeitszyklus außerdem in Abhängigkeit eines Istwerts des Gasdrucks relativ zu dem festen Zeitpunkt bestimmt werden. Beispielsweise kann der variable Zeitpunkt im Arbeitszyklus in Abhängigkeit einer Regeldifferenz des Saugrohrdrucks bestimmt werden, wobei die Regeldifferenz eine Differenz zwischen Sollwert und Istwert des Saugrohrdrucks ist.
Der Sollwert bezüglich des Gasdrucks im Gasleitungsabschnitt kann beispielsweise mit Hilfe eines oder mehrerer Kennfelder bestimmt werden. In manchen Ausführungsbeispielen können die Kennfelder im Vorfeld auf der Grundlage von Messungen an einem Prüfstand und/oder auf Grundlage von Testmessungen an der Verbrennungskraftmaschine und/oder auf Grundlage von Simulationen mit Hilfe von Berechnungen bzw. Simulationen erzeugt worden sein, so dass der Sollwert bezüglich des Gasdrucks aus dem oder den Kennfeldern abgelesen werden kann.

In manchen anderen Ausführungsbeispielen kann mit Hilfe von einem oder mehreren Kennfeldern ein Sollwert für eine Zustandsgröße, die mit dem Gasdruck im Gasleitungsabschnitt in Beziehung steht, bestimmt werden und auf Basis des Sollwerts dieser Zustandsgröße der Sollwert für den Gasdruck berechnet werden. Alternativ kann anstelle der Kennfelder nach Erkennen der Momentänderungsaufforderung eine Simulation oder eine andere Berechnung des Sollwertes des Gasdrucks oder des Sollwertes der mit dem Gasdruck in Beziehung stehenden Zustandsgröße durchgeführt werden. Auf die mit dem Gasdruck in Beziehung stehende Zustandsgröße wird später noch genauer eingegangen.
Aus der Grundlage des Gasdrucks kann mit Hilfe eines Füllungserfassungsmodells, das z.B. die Wirkung der Stellung des Stellorgans und des Schließzeitpunktes des Ventils berücksichtigt, oder mit Hilfe von Streckenmodellen der variable Zeitpunkt zum Schließen des Ventils bestimmt werden.

Das Verfahren zum Ausführen eines Gaswechsels enthält weiterhin den Schritt, dass das Stellorgan infolge der Momentänderungsaufforderung so gesteuert wird, dass sich im Gasleitungsabschnitt der in Abhängigkeit von der Momentänderungsaufforderung bestimmte Sollwert des Gasdrucks einstellt. Das Stellorgan kann eine Strömungsklappe, beispielsweise eine Drosselklappe, sein. Die Strömungsklappe kann so verstellt werden, dass ein Strömungsquerschnitt im Gasleitungsabschnitt vergrößert oder verkleinert wird. Dadurch kann der Gasdruck im Gasleitungsabschnitt beeinflusst werden. In manchen Beispielen kann der Gasdruck im Gasleitungsabschnitt verringert werden, indem der Strömungsquerschnitt vergrößert wird, und vergrößert werden, indem der Strömungsquerschnitt verringert wird. Alternativ kann das Stellorgan eine Kombination aus einer Gasturbine und einem Verdichter, beispielsweise ein Turbolader, sein. Um den Gasdruck im Gasleitungsabschnitt regeln zu können, können Strömungsschaufeln des Verdichters entsprechend eingestellt werden.
Bei sehr kurzen Momentänderungsaufforderungen, die beispielsweise nur wenige Motorzyklen andauern, kann auf das Einstellen des Gasdrucks im Gasleitungsabschnitt verzichtet werden und nur mit Hilfe der Verschiebung des Schließzeitpunktes des Ventils reagiert werden. Durch diese Steuerung kann die gewünschte Zylinderfüllung sehr schnell erfolgen.
Das Ventil kann infolge der Momentänderungsaufforderung während eines oder mehrerer Arbeitszyklen bzw. Motorzyklen zu dem bestimmten variablen Zeitpunkt geschlossen werden. Das Schließen des Ventils kann beispielsweise ein Schalten von einem voll geöffneten Zustand in einen voll geschlossenen Zustand sein. In manchen Ausführungsbeispielen wird zudem infolge der Momentänderungsaufforderung das Stellorgan so eingestellt, dass sich der Istwert des Gasdrucks an den Sollwert des Gasdrucks annähert. Das Ventil kann solange, d.h. über so viele Arbeitszyklen bzw. Motorzyklen, zu dem bestimmten variablen Zeitpunkt geschlossen werden, bis der Istwert den Sollwert des Gasdrucks erreicht hat. Durch das Schließen des Ventils zu dem variablen Zeitpunkt kann die Verzögerung bei der Einstellung des Gasdrucks ausgeglichen werden.

In manchen Ausführungsbeispielen kann das Ventil infolge der Momentänderungsaufforderung in einem ersten Motorzyklus nach der Momentänderungsaufforderung zu dem bestimmten variablen Zeitpunkt und in direkt nachfolgenden Motorzyklen zu angepassten Zeitpunkten, die zwischen dem variablen Zeitpunkt und dem festen Zeitpunkt liegen, geschlossen werden. Die Schließzeitpunkte des Ventils während der dem ersten Motorzyklus nachfolgenden Motorzyklen können beispielsweise schrittweise an den festen Zeitpunkt angenähert werden. Da gleichzeitig mit der Verschiebung des Schließzeitpunktes das Stellorgan gesteuert werden kann, kann das Ventil solange zu einem Zeitpunkt, der zwischen dem festen Zeitpunkt und dem variablen Zeitpunkt liegt, geschlossen werden, bis ein Istwert bezüglich des Gasdrucks dem Sollwert bezüglich des Gasdrucks entspricht. Im Anschluss kann das Ventil wieder zum festen Zeitpunkt geschlossen werden.

In manchen Ausführungsbeispielen kann das Ventil ein Einlassventil, der Gasleitungsabschnitt ein Saugrohr, das über das Einlassventil mit dem Zylinder verbunden ist, und das Stellorgan zum Einstellen eines Gasdrucks in dem Gasleitungsabschnitt eine Drosselklappe zum Einstellen eines Saugrohrdrucks in dem Saugrohr, die in dem Saugrohr angeordnet ist, sein. Das bedeutet, dass infolge einer Momentänderungsaufforderung ein Sollwert für den Saugrohrdruck bestimmt wird und dass auf Basis dieses Sollwertes der Zeitpunkt, zu dem das Einlassventil geschlossen wird, bestimmt wird.

Die Momentänderungsaufforderung kann beispielsweise eine Aufforderung sein, das Moment der Verbrennungskraftmaschine zu erhöhen. Die Momentänderungsaufforderung kann beispielsweise ein entsprechendes Sollmoment umfassen. In diesem Fall kann der Sollwert bezüglich des Saugrohrdrucks höher sein als der Istwert des Saugrohrdrucks, da eine Frischluftmasse im Zylinder für die Erhöhung des Moments der Verbrennungskraftmaschine vergrößert werden muss. Entsprechend kann der variable Zeitpunkt zeitlich nach dem festen Zeitpunkt liegen. Alternativ kann die Momentänderungsaufforderung auch eine Aufforderung zum Verringern des Moments enthalten. In diesem Fall kann dann der Sollwert bezüglich das Saugrohrdrucks geringer sein als der Istwert des Saugrohrdrucks, da die Menge an Frischluft im Zylinder verringert werden soll. Entsprechend kann der variable Zeitpunkt zeitlich vor dem festen Zeitpunkt liegen. Ein Beispiel, wie der variable Zeitpunkt bei Anforderung einer Erhöhung des Moments gewählt wird, wird weiter unten im Detail beschrieben.

In manchen anderen Ausführungsbeispielen kann das Ventil ein Auslassventil, der Gasleitungsabschnitt ein Auslasskanalabschnitt, der über das Auslassventil mit dem Zylinder verbunden ist, und das Stellorgan zum Einstellen eines Gasdrucks in dem Gasleitungsabschnitt ein Abgasturbolader zum Einstellen eines Abgasgegendrucks im Auslasskanalabschnitt, der in dem Auslasskanalabschnitt angeordnet ist, sein. Das bedeutet, dass infolge einer Momentänderungsaufforderung ein Sollwert für den Abgasgegendruck bestimmt wird und dass auf Basis dieses Sollwertes der Zeitpunkt, zu dem das Auslassventil geschlossen wird, bestimmt wird.

Die Momentänderungsaufforderung kann eine Aufforderung zum Erhöhen des Moments enthalten. Die Momentänderungsaufforderung kann beispielsweise ein entsprechendes Sollmoment umfassen. In diesem Fall kann der Sollwert bezüglich des Abgasgegendrucks geringer sein als der Istwert, da eine Frischluftmasse im Zylinder für die Erhöhung des Moments der Verbrennungskraftmaschine vergrößert werden muss und damit ein Restgasanteil im Zylinder verringert werden soll. Entsprechend kann das Auslassventil zum variablen Zeitpunkt, der zeitlich vor dem festen Zeitpunkt liegt, geschlossen werden. Alternativ kann die Momentänderungsaufforderung auch eine Aufforderung zum Verringern des Moments enthalten. In diesem Fall kann dann der Sollwert bezüglich des Abgasgegendrucks höher sein als der Istwert des Abgasgegendrucks, da die Menge an Restgas im Zylinder erhöht werden soll. Entsprechend kann das Auslassventil zeitlich nach dem festen Zeitpunkt geschlossen werden. Ein Beispiel, wie der variable Zeitpunkt bei Anforderung einer Erhöhung des Moments gewählt wird, wird weiter unten im Detail beschrieben.

In manchen Ausführungsbeispielen kann die Verbrennungskraftmaschine zwei Gasleitungsabschnitte mit je einem Ventil und einem Stellorgan aufweisen. Bei diesen Verbrennungskraftmaschinen kann eines oder beide der Ventile gemäß dem erfindungsgemäßen Verfahren geschlossen werden.

Beispielsweise kann der Zylinder über ein Einlassventil mit einem Saugrohr, in dem eine Drosselklappe zum Einstellen eines Saugrohrdrucks vorgesehen ist, und über ein Auslassventil mit einem Auslasskanal, in dem ein Turbolader zum Einstellen des Abgasgegendrucks vorgesehen ist, verbunden sein. Das Einlassventil kann bei gleichbleibendem Moment der Verbrennungskraftmaschine bzw. bei gleichbleibendem Motormoment zu einem einlassventilbezogenen festen Zeitpunkt in dem Arbeitszyklus bzw. in dem Motorzyklus schließen und das Auslassventil kann bei gleichbleibendem Motormoment zu einem auslassventilbezogenen festen Zeitpunkt in dem Motorzyklus schließen. Sobald eine Momentänderungsaufforderung erkannt wird, können ein Sollwert bezüglich des Saugrohrdrucks im Saugrohr in Abhängigkeit von der Momentänderungsaufforderung und ein Sollwert bezüglich des Abgasgegendrucks im Abgaskanal in Abhängigkeit von der Momentänderungsaufforderung bestimmt werden. Anschließend können ein einlassventilbezogener variabler Zeitpunkt zum Schließen des Einlassventils infolge der Momentänderungsaufforderung und ein auslassventilbezogener variabler Zeitpunkt zum Schließen des Auslassventils infolge der Momentänderungsaufforderung bestimmt werden. Der einlassventilbezogene variable Zeitpunkt im Motorzyklus kann in Abhängigkeit vom Sollwert des Saugrohrdrucks relativ zu dem einlassventilbezogenen festen Zeitpunkt verschoben sein. Der auslassventilbezogene variable Zeitpunkt im Motorzyklus kann in Abhängigkeit vom Sollwert des Abgasgegendrucks relativ zu dem auslassventilbezogenen festen Zeitpunkt verschoben sein.

Wird bei Verbrennungskraftmaschinen mit zwei Gasleitungsabschnitten mit je einem Ventil und einem Stellorgan nur eines der Ventile gemäß dem erfindungsgemäßen Verfahren geschlossen, kann das andere Ventil mit Hilfe von Kennfeldern, die vorab mit Hilfe von Messungen an einem Prüfstand und/oder von Simulationen erstellt wurden, gesteuert werden. Eine solche Steuerung wird weiter unten noch im Detail beschrieben.

Wie oben bereits erwähnt, kann die Momentänderungsaufforderung eine Aufforderung zur Erhöhung des Motormoments enthalten. Infolge einer solchen Momentänderungsaufforderung kann der variable Zeitpunkt zum Schließen des Einlassventils später im Motorzyklus liegen als der feste Zeitpunkt. Der feste Zeitpunkt in einer Ansaugphase des Motorzyklus kann vor Erreichen eines maximalen Volumens des Zylinders liegen. Dies wird nachfolgend anhand eines Beispiels erklärt:
In einem Arbeitszyklus der Verbrennungsmaschine kann der Ansaugprozess beispielsweise beginnen, wenn das Zylindervolumen minimal ist bzw. wenn der Kolben einen oberen Totpunkt erreicht, und enden, wenn das Zylindervolumen maximal ist, bzw. wenn der Kolben einen unteren Totpunkt erreicht. Wird die Verbrennungskraftmaschine im Miller-Verfahren betrieben, so kann der Ansaugvorgang schon bei einem Zylindervolumen, das geringer als das maximale Zylindervolumen ist, durch Schließen des Einlassventils beendet werden, wodurch sich Vorteile hinsichtlich des Kraftstoffverbrauchs und der Temperatur ergeben. Dieser Schließzeitpunkt kann der feste Zeitpunkt sein. Wird nun eine Momentänderungsaufforderung erkannt (hier eine Anforderung zur Momenterhöhung), kann das Ventil zu dem variablen Zeitpunkt, der zeitlich nach dem festen Zeitpunkt liegt, geschlossen werden. Der variable Zeitpunkt kann beispielsweise der Zeitpunkt sein, bei dem das Zylindervolumen maximal ist oder größer als das Zylindervolumen zum festen Zeitpunkt. Durch das Verschieben des Schließzeitpunktes des Einlassventils zu dem variablen Zeitpunkt, der später als der feste Zeitpunkt ist, kann das Zylindervolumen am Ende des Ansaugprozesses vergrößert werden, dass bei im Wesentlichen gleichem Saugrohrdruck mehr Frischluft in den Zylinder einfließen kann. Da infolge der Anforderung einer Momenterhöhung auch die Drosselklappe eingestellt werden kann, kann sich mit Verzögerung der Sollwert bezüglich des Saugrohrdrucks im Saugrohr einstellen. In manchen Ausführungsbeispielen kann das Einlassventil bis zum Erreichen des Sollwerts des Saugrohrdrucks zu dem variablen Zeitpunkt oder einem Zeitpunkt zwischen dem festen Zeitpunkt und dem variablen Zeitpunkt geschlossen werden. Damit kann sehr schnell auf Momentänderungsaufforderungen reagiert werden, wobei gleichzeitig die Mechanismen der kraftstoffarmen Ventilsteuerung beibehalten werden.

Ähnlich wie oben hinsichtlich des Einlassventils erläutert, kann infolge einer Aufforderung zur Erhöhung des Motormoments der variable Zeitpunkt zum Schließen des Auslassventils früher im Motorzyklus liegen als der feste Zeitpunkt. Der feste Zeitpunkt zum Schließen des Auslassventils in einer Ansaugphase des Motorzyklus kann nach Erreichen eines minimalen Volumens des Zylinders liegen, d.h. wenn der obere Totpunkt, der den Beginn des Ansaugens definiert, bereits überschritten ist. Infolge einer Aufforderung, das Moment der Verbrennungskraftmaschine zu erhöhen, kann nun ein Sollwert für den Abgasgegendruck bestimmt werden. In diesem Fall kann der Sollwert bezüglich des Abgasgegendrucks geringer sein als der Istwert, da ein Restgasanteil im Zylinder für die Erhöhung des Moments der Verbrennungskraftmaschine verringert werden soll. Durch das Verschieben des Schließzeitpunktes des Auslassventils zu einem variablen Zeitpunkt, der früher als der feste Zeitpunkt ist, kann beispielsweise beim Ansaugen weniger Restgas in den Zylinder eingesogen werden, so dass mehr Platz für Frischluft bleibt. Da infolge der Anforderung einer Momenterhöhung auch der Turbolader eingestellt werden kann, kann sich mit Verzögerung der Sollwert bezüglich des Abgasgegendrucks im Abgaskanal bzw. in dem Krümmer einstellen. In manchen Ausführungsbeispielen kann das Auslassventil bis zum Erreichen des Sollwerts des Abgasgegendrucks zu dem variablen Zeitpunkt oder einem Zeitpunkt zwischen dem festen Zeitpunkt und dem variablen Zeitpunkt geschlossen werden. Damit kann sehr schnell auf Momentänderungsaufforderungen reagiert werden, wobei gleichzeitig die Mechanismen der kraftstoffarmen Ventilsteuerung berücksichtigt werden.

Die Verbrennungskraftmaschine kann zusätzliche Stellmittel zum Beeinflussen des Gaswechsels enthalten, beispielsweise ein Ventil einer externen Abgasrückführung. Diese zusätzlichen Stellmittel, die Stellorgane, beispielsweise die Drosselklappe und/oder der Turbolader, und/oder ein Ventil, das nicht gemäß dem erfindungsgemäßen Verfahren geschaltet wird, können gesteuert werden, indem ein Sollwert bezüglich der Stellung des Stellmittels, der Stellorgane und/oder des Ventils in Abhängigkeit von der Momentänderungsaufforderung bestimmt wird. Der jeweilige Sollwert kann beispielsweise mit Hilfe eines oder mehrerer Kennfelder bestimmt werden. In manchen Ausführungsbeispielen können die Kennfelder im Vorfeld auf der Grundlage von Messungen an einem Prüfstand und/oder auf Grundlage von Testmessungen an der Verbrennungskraftmaschine und/oder auf Grundlage von Simulationen mit Hilfe von Berechnungen bzw. Simulationen erzeugt worden sein, so dass der Sollwert bezüglich des Gasdrucks aus dem oder den Kennfeldern abgelesen werden kann. In manchen anderen Ausführungsbeispielen kann mit Hilfe von einem oder mehreren Kennfeldern ein Sollwert für eine Zustandsgröße, die mit der Stellung des Stellmittels, des Stellorgans oder des Ventiles in Beziehung steht, bestimmt werden und auf Basis des Sollwerts dieser Zustandsgröße die Stellung des Stellmittels, des Stellorgans oder des Ventiles berechnet werden. Alternativ kann anstelle der Kennfelder nach Erkennen der Momentanforderung eine Simulation oder eine andere Berechnung der Stellung des Stellmittels, des Stellorgans oder des Ventiles oder des Sollwertes der mit der Stellung des Stellmittels, des Stellorgans oder des Ventiles in Beziehung stehenden Zustandsgröße durchgeführt werden.

Die Zustandsgröße kann beispielsweise eine relative Frischluftmenge, eine Menge an intern rückgeführtem Restgas, eine Menge an extern rückgeführtem Restgas, der Liefergrad, ein Druckvorhalt über dem Stellorgan, oder eine Scavengingrate sein. Als Frischluft wird die Luft verstanden, die in den Zylinder eingelassen wird. Sie kann ein Gasgemisch sein, dessen Zusammensetzung der Luft in der Atmosphäre gleicht, oder ein Gas-Kraftstoffgemisch. Das Restgas ist im Gegensatz dazu ein sauerstoffarmes Gasgemisch, das nach dem Verbrennungsvorgang aus dem Zylinder ausgelassen wird. Der Liefergrad ist als Verhältnis aus der Frischluftmasse und der Luftmasse, die maximal in dem maximalen Zylindervolumen aufgenommen werden kann, definiert. Unter Scavenging wird ein Vorgang verstanden, bei dem im Übergangsintervall zwischen Ausblasen und Ansaugen beide, das Einlassventil und das Auslassventil, geöffnet sind.

Die vorliegende Erfindung betrifft weiterhin eine Steuervorrichtung zum Ausführen eines Gaswechsels in einem Zylinder einer Verbrennungskraftmaschine. Beispielsweise kann die Steuervorrichtung zum Ausführen des voranstehend beschriebenen Verfahrens zum Ausführen eines Gaswechsels in einem Zylinder ausgebildet sein. Die Steuervorrichtung basiert auf einer Ausgestaltung der Verbrennungskraftmaschine, bei der der Zylinder über ein Ventil mit einem Gasleitungsabschnitt verbunden ist, in dem ein Stellorgan zum Einstellen eines Gasdrucks in dem Gasleitungsabschnitt vorgesehen ist. Die Steuervorrichtung ist so ausgestaltet, dass sie das Ventil bei gleichbleibendem Moment der Verbrennungskraftmaschine zu einem festen Zeitpunkt in einem Arbeitszyklus der Verbrennungskraftmaschine schließt. Die Steuervorrichtung enthält eine Schnittstelle zum Empfangen einer Momentänderungsaufforderung und ein Prozessormodul. Das Prozessormodul ist dazu ausgebildet, einen Sollwert bezüglich des Gasdrucks im Gasleitungsabschnitt in Abhängigkeit von der Momentänderungsaufforderung zu bestimmen und einen variablen Zeitpunkt zum Schließen des Ventils infolge der Momentänderungsaufforderung zu bestimmen, wobei der variable Zeitpunkt im Arbeitszyklus in Abhängigkeit vom Sollwert des Saugrohrdrucks relativ zu dem festen Zeitpunkt verschoben ist.

Die Schnittstelle kann eine Hardwareschnittstelle sein. Die Schnittstelle kann dazu ausgebildet sein, dass sie die Steuervorrichtung mit einer ECU oder direkt oder indirekt mit dem Gaspedal verbindet und eine Datenübertragung, d.h. eine Übertragung eines Befehls, der die Momentänderungsaufforderung, beispielsweise ein Sollmoment, enthält, an die Steuervorrichtung ermöglicht. Das Prozessormodul kann elektronische Bauteile aufweisen, wie einen Mikroprozessor. Das Prozessormodul kann ein Sollwertbestimmungsmodul zum Bestimmen des Sollwertes des Gasdrucks und ein Zeitpunktbestimmungsmodul zum Bestimmen des variablen Zeitpunkts in Abhängigkeit vom Gasdruck und der Momentänderungsaufforderung enthalten.

Die Steuervorrichtung kann außerdem einen Speicher enthalten, in dem Sollwerte bezüglich des Gasdrucks im Gasleitungsabschnitt in Abhängigkeit von der Momentänderungsaufforderung und/oder Informationen zur Bestimmung des variablen Zeitpunktes in Abhängigkeit vom Gasdruck hinterlegt sind. Der Speicher kann ein Datenspeicher sein.

Die Steuervorrichtung kann ferner dazu ausgebildet sein, die hinsichtlich des Verfahrens beschriebenen Merkmale einzeln oder in beliebigen Kombinationen auszuführen.

Die vorliegende Erfindung betrifft weiterhin eine Verbrennungskraftmaschine mit einer Steuervorrichtung, wie sie oben beschrieben ist, und einem Zylinder. Der Zylinder ist über ein Ventil mit einem Gasleitungsabschnitt verbunden, in dem ein Stellorgan zum Einstellen eines Gasdrucks in dem Gasleitungsabschnitt vorgesehen ist. Das Ventil ist mittels der Steuervorrichtung so steuerbar, dass das Ventil bei gleichbleibendem Moment der Verbrennungskraftmaschine zu einem festen Zeitpunkt in einem Arbeitszyklus der Verbrennungskraftmaschine schließt und dass das Ventil infolge einer Momentänderungsaufforderung zu einem variablen Zeitpunkt schließt, wobei der variable Zeitpunkt im Arbeitszyklus in Abhängigkeit von einem Sollwert des Gasdrucks relativ zu dem festen Zeitpunkt verschoben ist.

Die Verbrennungskraftmaschine kann ein Einlassventil, über das der Zylinder mit einem Saugrohr, in dem eine Drosselklappe vorgesehen ist, verbunden ist, und ein Auslassventil enthalten, über das der Zylinder mit einem Auslasskanal, in dem ein Turbolader vorgesehen ist, verbunden ist. Die Verbrennungskraftmaschine kann so gestaltet sein, dass das Einlassventil und/oder das Auslassventil infolge einer Momentanforderung zu einem einlassventilbezogenen variablen Zeitpunkt bzw. zu einem auslassventilbezogenen variablen Zeitpunkt geschlossen werden können.

Manche Ausführungsbeispiele betreffen auch ein Kraftfahrzeug mit einer Verbrennungskraftmaschine, wie sie oben beschrieben wurde.

Ausführungsbeispiele der Erfindung werden nun beispielhaft und unter Bezugnahme auf die beigefügten Zeichnungen beschrieben, in denen:
Fig. 1 schematisch ein Flussdiagramm des erfindungsgemäßen Verfahrens zeigt;
Fig. 2 schematisch einen Aufbau einer Steuervorrichtung zeigt;
Fig. 3 eine Verschiebung der Schließzeitpunkte bei Anforderung zur Momenterhöhung darstellt;
Fig. 4 einen zeitlichen Verlauf des Saugrohrdrucks und der Verschiebung des Schließzeitpunktes eines Einlassventils über mehrere Arbeitszyklen veranschaulicht;
Fig. 5 ein Ausführungsbeispiel für den Aufbau einer Steuervorrichtung zeigt; und
Fig. 6 ein weiteres Ausführungsbeispiel für den Aufbau einer Steuervorrichtung zeigt.

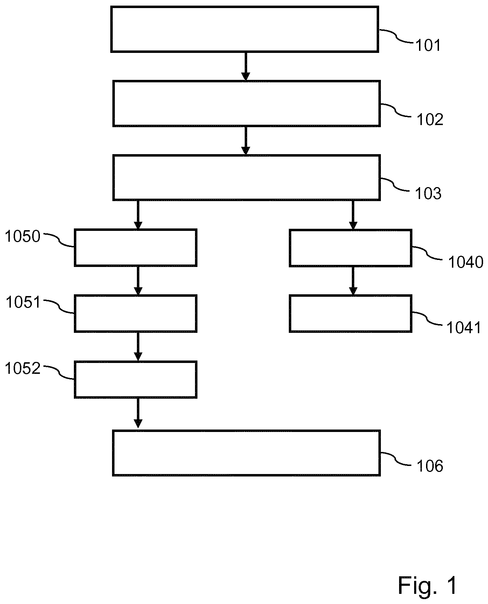

Ein Ausführungsbeispiel eines Verfahrens zum Ausführen eines Gaswechsels in einem Zylinder einer Verbrennungskraftmaschine gemäß der Erfindung ist in Fig. 1 schematisch dargestellt.

Die Verbrennungskraftmaschine weist dazu einen Zylinder auf, der über ein Einlassventil mit einem Saugrohr verbunden ist, in dem eine Drosselklappe zum Einstellen eines Saugrohrdrucks vorgesehen ist.

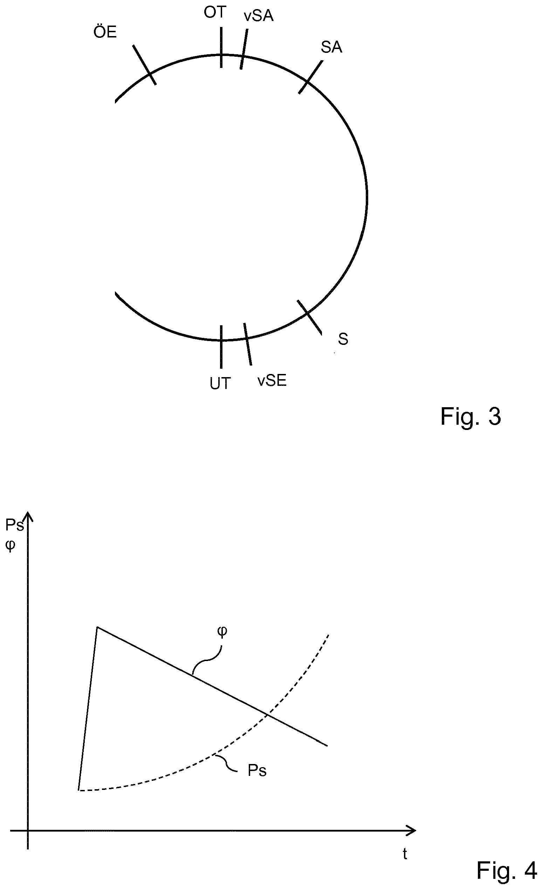

In einem laufenden Steuerprozess 101, während dessen das Moment der Verbrennungskraftmaschine konstant ist, wird das Einlassventil zu einem festen Zeitpunkt in einem Arbeitszyklus geschlossen. Der feste Zeitpunkt ist so definiert, dass zu diesem das Zylindervolumen geringer als das maximal mögliche Zylindervolumen ist. Der Arbeitszyklus der Verbrennungskraftmaschine wird weiter unten mit Bezug auf Fig. 3 im Detail beschrieben.

Kommt es zu einer Anforderung zur Erhöhung des Motormoments, die in diesem Beispiel durch Treten eines Gaspedals ausgelöst wird, wird diese Momentänderungsaufforderung in Schritt 102 erkannt. In einem nachfolgenden Schritt 103 wird ein Sollwert bezüglich des Saugrohrdrucks im Saugrohr in Abhängigkeit von der Momentänderungsaufforderung bestimmt. Dazu wird auf vorab gespeicherte Kennfelder, die den Saugrohrdruck in Abhängigkeit vom Motormoment beschreiben, zugegriffen, so dass der Sollwert des Saugrohrdrucks abgelesen werden kann. Der Sollwert des Saugrohrdrucks ist größer als ein zum Zeitpunkt der Momentänderungsaufforderung herrschender Saugrohrdruck.

Mit Hilfe des Sollwertes des Saugrohrdrucks wird in Schritt 1040 eine Sollstellung der Drosselklappe bestimmt. Anschließend wird die Drosselklappe entsprechend dem bestimmten Sollwert der Drosselklappenstellung eingestellt (Schritt 1041).

Gleichzeitig zu Schritt 1040 wird in Schritt 1050 ein variabler Zeitpunkt zum Schließen des Einlassventils infolge der Momentänderungsaufforderung in Abhängigkeit vom Sollwert des Saugrohrdrucks bestimmt. Der bestimmte variable Zeitpunkt im Motorzyklus in Abhängigkeit vom Sollwert des Saugrohrdrucks ist relativ zu dem festen Zeitpunkt nach hinten verschoben, wie hinsichtlich der Fig. 3 weiter unter erläutert wird.

Anschließend wird das Einlassventil für einige Motorzyklen zu dem variablen Zeitpunkt geschlossen (Schritt 1051). Sobald der Istwert des Saugrohrdrucks dem Sollwert des Saugrohrdrucks entspricht, wird das Einlassventil wieder zu dem festen Zeitpunkt geschlossen (Schritt 1052). Anschließend wird in einen kontinuierlichen Steuerprozess 106 übergegangen, der dem Prozess 101 ähnelt und in dem das Einlassventil zum festen Zeitpunkt geschlossen wird.

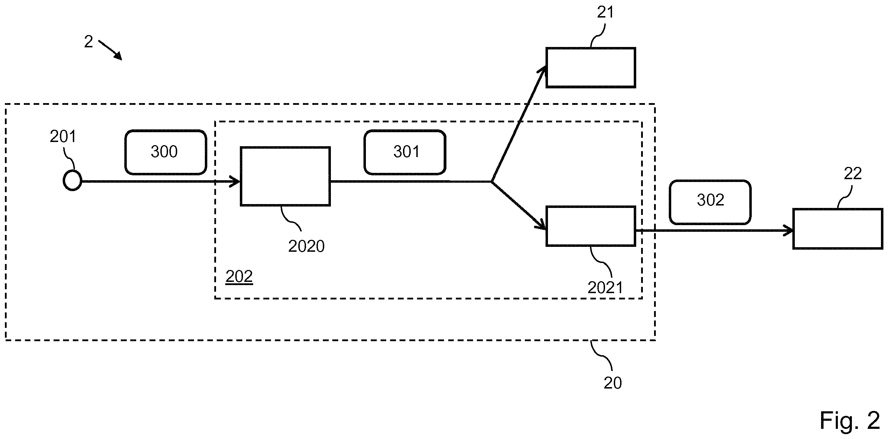

In Fig. 2 ist schematisch eine Verbrennungskraftmaschine 2 zum Ausführen eines Gaswechsels in einem Zylinder gezeigt. Die Verbrennungskraftmaschine 2 ist wie die zur Ausführung des Verfahrens aus der Fig. 1 erläuterte Verbrennungskraftmaschine aufgebaut. Die Verbrennungskraftmaschine 2 enthält zudem eine Steuervorrichtung 20. Die Steuervorrichtung 20 weist eine Schnittstelle 201 auf, die mit einer ECU verbunden sein kann. Die ECU ist dazu ausgebildet, Daten bezüglich einer Momentänderungsaufforderung, die beispielsweise durch Treten des Gaspedals erzeugt sind, beispielsweise ein Sollmoment, zu verarbeiten und an die Steuervorrichtung 20 zu übertragen.

Die Steuervorrichtung 20 enthält weiterhin ein Prozessormodul 202, das ein Sollwertbestimmungsmodul 2020 und ein Zeitpunktbestimmungsmodul 2021 enthält. Das Prozessormodul 202 ist mit der Schnittstelle 201 verbunden, um auf eine Momentänderungsaufforderung 300, die über die Schnittstelle 201 zur Verfügung gestellt wird, zugreifen zu können. Die Steuervorrichtung 20 ist mit einem Stellmodul 21 zum Verstellen der Position der Drosselklappe verbunden, um den Sollwert 301, der durch die Sollwertbestimmungseinheit 2020 bestimmt wurde, an das Stellmodul 21 melden zu können. Das Sollwertbestimmungsmodul 2020 und das Zeitpunktbestimmungsmodul 2021 sind so miteinander gekoppelt, dass das Zeitpunktbestimmungsmodul 2021 den Sollwert 301 des Saugrohrdrucks erhält, um daraus den variablen Zeitpunkt 302 zu bestimmen. Die Steuervorrichtung 20 ist weiterhin mit einem Schaltmodul 22 zum Schalten des Einlassventils verbunden, um den variablen Zeitpunkt 302 übertragen zu können und das Schaltmodul 22 in den Motorzyklen nach einer Momentänderungsaufforderung 300 zum variablen Zeitpunkt 302 zu schließen.

Fig. 3 zeigt ein Diagramm eines Ausschnitts eines Arbeitszyklus der Verbrennungskraftmaschine, das die Öffnungs- und Schließzeitpunkte des Einlassventils und den Schließzeitpunkt des Auslassventils während des Ansaugens verdeutlicht. Es ist ein Kreissektor gezeigt, auf dem ein oberer Totpunkt OT und ein unterer Totpunkt UT angedeutet ist. Am oberen Totpunkt OT befindet sich der Kolben der Verbrennungskraftmaschine in einer Position, in der das Zylindervolumen minimal ist. Am unteren Totpunkt UT befindet sich der Kolben in einer Position im Zylinder, so dass das Zylindervolumen maximal ist.

Zwischen dem oberen Totpunkt OT und dem unteren Totpunkt UT entlang der rechten Kreishälfte erfolgt das Ansaugen. Wie in Fig. 3 links vom oberen Totpunkt OT gezeigt, wird das Einlassventil der Verbrennungskraftmaschine zu einem Öffnungszeitpunkt ÖE geöffnet, so dass durch in den Zylinder einfließende Frischluft im Zylinder verbliebenes Restgas aus dem Zylinder verdrängt werden kann. Kurz nach Erreichen des oberen Totpunkts OT liegt ein Schließzeitpunkt SA des Auslassventils. Da die Verbrennungskraftmaschine gemäß dem Miller-Verfahren arbeitet, liegt der Schließzeitpunkt SE des Einlassventils vor Erreichen des unteren Totpunkts UT, d.h. im Mittelteil des zweiten Quadranten des Kreissektors. Der Schließzeitpunkt SE des Einlassventils ist im Gleichgewichtszustand, d.h. wenn keine Momentänderungsaufforderung vorliegt und Zustandsgrößen konstant sind, ein fester Schließzeitpunkt. Sobald eine Momentanforderungsaufforderung, das Moment zu erhöhen, erkannt wird, wird das Einlassventil zu einem späteren Zeitpunkt, einem variablen Zeitpunkt vSE, geschlossen. Der variable Schließzeitpunkt vSE des Einlassventils ist in Fig. 3 unmittelbar vor dem unteren Totpunkt UT eingezeichnet. Allerdings kann die Verschiebung zwischen variablem Schließzeitpunkt vSE und festem Schließzeitpunk SE auch geringer sein oder mit steigender Zahl an Motorzyklen nach der Momentänderungsaufforderung abnehmen. Eine mögliche Abhängigkeit der Verschiebung ϕ des variablen Zeitpunktes sowie der Saugrohrdruck Ps mit steigender Zahl an Arbeitszyklen bzw. mit der Zeit t ist in Fig. 4 angedeutet.

Fig. 4 zeigt, dass zum Zeitpunkt T1, bei dem eine Momentänderungsaufforderung erkannt wird, die Verschiebung ϕ des variablen Schließzeitpunkts relativ zum festen Schließzeitpunkt plötzlich ansteigt. Der Saugrohrdruck Ps hingegen steigt nur langsam, da es eine Weile dauert, bis der Sollwert des Saugrohrdrucks eingestellt ist. Mit der Zeit verringert sich die Verschiebung ϕ des variablen Schließzeitpunktes während der Saugrohrdruck weiter ansteigt.

Durch das Verschieben des Schließzeitpunktes des Einlassventils von einem festen Schließzeitpunkt SE zu dem variablen Schließzeitpunkt vSE kann somit schneller auf eine Momentänderungsaufforderung reagiert werden als durch Einstellen des Saugrohrdrucks. Da der Saurohrdruck im Anschluss angepasst wird, kann bei gleichmäßigem Fahren weiterhin erreicht werden, dass die Vorteile des Miller-Verfahrens ausgenutzt werden können.

Der Schließzeitpunkt SA des Auslassventils kann im Gleichgewichtszustand, d.h. wenn keine Momentänderungsaufforderung vorliegt, ein fester Zeitpunkt sein. Liegt jedoch eine Momentänderungsaufforderung zur Erhöhung des Moments vor, so kann das Auslassventil zu einem früheren Zeitpunkt, dem variablen Schließzeitpunkt vSA, geschlossen werden, um zu vermeiden, dass zu viel Restgas in den Zylinder zurückfließt. Der variable Schließzeitpunkt vSA des Auslassventils liegt, wie in Fig. 3 gekennzeichnet, zwischen dem oberen Totpunkt OT und dem festen Schließzeitpunkt SA des Auslassventils. Die Verschiebung zwischen dem variablen Schließzeitpunkt vSA des Auslassventils und dem festen Schließzeitpunkt SA des Auslassventils kann auch geringer sein oder mit steigender Zahl an Motorzyklen nach der Momentänderungsaufforderung abnehmen. Ein Verlauf der Verschiebung des variablen Zeitpunktes vSA sowie ein Verlauf des Abgasgegendrucks mit steigender Zahl an Arbeitszyklen bzw. mit der Zeit t können analog zu der Verschiebung ϕ und dem Saugrohrdruck Ps in Fig. 4 verlaufen. Somit kann schnell auf Momentänderungsaufforderungen reagiert werden.

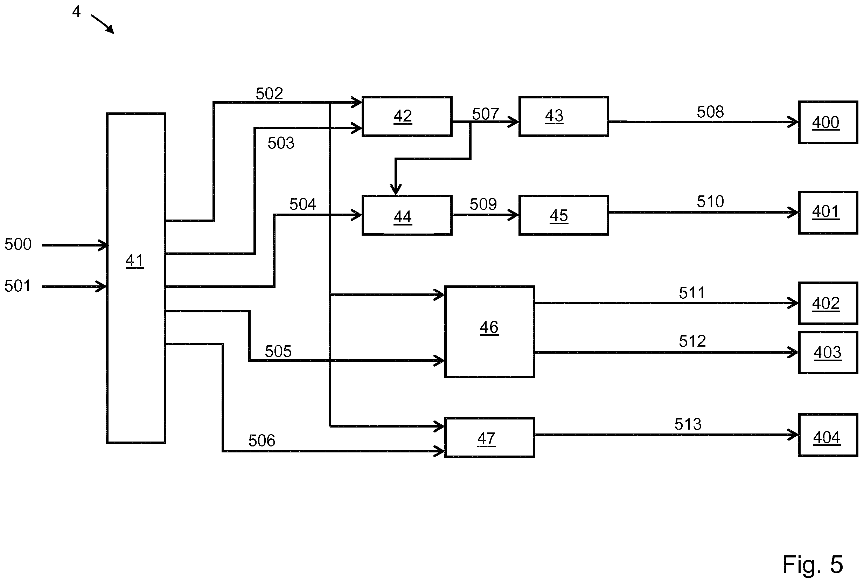

Mit Bezug auf Fig. 2 wurde lediglich die Steuerung des Einlassventils einer Verbrennungskraftmaschine beschrieben. Fig. 5 zeigt nun ein weiteres Ausführungsbeispiel für eine Verbrennungskraftmaschine 4, das auf die Steuerung einer Reihe von füllungsbeeinflussenden Stellelementen eingeht.

Die Verbrennungskraftmaschine 4 enthält eine Steuervorrichtung. Die Steuervorrichtung enthält eine Schnittstelle (nicht gezeigt), über die auf eine aktuelle Drehzahl 500 und auf ein Sollmoment 501, d.h. eine Momentänderungsaufforderung, zugegriffen wird. Die Schnittstelle kann dazu z.B. mit einer ECU verbunden sein.

Die Steuervorrichtung enthält weiterhin ein Prozessormodul, das ein Sollwertbestimmungsmodul 41 enthält. Das Sollwertbestimmungsmodul 41 enthält einen Speicher, der Kennfelder für eine Luftmasse, einen Liefergrad, einen Druckvorhalt über der Drosselklappe, einen Restgasgehalt einer internen Abgasrückführung und einen Restgasgehalt einer externen Abgasrückführung aufweist. Das Sollwertbestimmungsmodul 41 ist dazu ausgebildet, mit Hilfe der Kennfelder aus dem Speicher und der aktuellen Drehzahl 500 und des Sollmoments 501, die über die Schnittstelle empfangen werden, eine Soll-Luftmasse 502, einen Soll-Liefergrad 503, einen Soll-Druckvorhalt 504, einen Soll-Restgasgehalt 505 der internen Abgasrückführung und einen Soll-Restgasgehalt 506 der externen Restgasrückführung zu bestimmen und auszugeben.

Die Soll-Luftmasse 502 und der Soll-Liefergrad 503 werden von der Sollwertbestimmungseinheit 41 an eine Saugrohrdruckbestimmungsvorrichtung 42 weitergegeben, so dass diese einen Sollsaugrohrdruck 507 berechnet. Der Sollsaugrohrdruck 507 wird an einen Saugrohrdruckregler 43 übermittelt, der dann die Drosselklappe 400 im Zylinder in eine geeignete Stellung bringt (Bezugszeichen 508).

Der Saugrohrdruck 507 wird zudem an ein Soll-Ladedruckbestimmungsmodul 44 übermittelt. Das Soll-Ladedruckbestimmungsmodul 44 ist weiterhin mit dem Sollwertbestimmungsmodul 41 verbunden, um den Soll-Druckvorhalt 504 zu empfangen. Das Soll-Ladedruckbestimmungsmodul 44 ist dazu ausgebildet, einen Soll-Ladedruck 509 zu berechnen und an einen Ladedruckregler 45 zu übertragen. Der Ladedruckregler 54 ist dazu ausgebildet, den Turbolader 401 im Auslasskanal zu steuern (Bezugseichen 510).

Die Steuereinheit der Verbrennungskraftmaschine 4 weist zudem ein Zeitpunktbestimmungsmodul 46 auf. Das Zeitpunktbestimmungsmodul 46 ist mit dem Sollwertbestimmungsmodul 41 verbunden, um die Soll-Luftmasse 502 und den Soll-Restgasgehalt 505 von dieser zu empfangen. Das Zeitpunktbestimmungsmodul 46 ist dazu ausgebildet, auf Basis der aktuellen Drehzahl 500, dem Sollmoment 501, der Soll-Luftmasse 502 und dem Soll-Restgasgehalt 505 der internen Abgasrückführung die Schaltzeitpunkte des Einlassventils (402) und des Auslassventils (403) zu bestimmen und diese entsprechend einzustellen (Bezugszeichen 511, 512), d.h. zu öffnen und zu schließen.

Dazu sind Füllungserfassungsmodelle für die Frischluftmasse und für den Restgasgehalt der internen Abgasrückführung bereitgestellt. Über partielle Ableitungen der Füllungserfassungsmodelle wird der Einfluss des Einlassventils und des Auslassventils auf die Frischluftmasse und den Restgasgehalt der internen Abgasrückführung ermittelt. Mit Hilfe einer Jacobi-Matrix werden dann die Schaltzeitpunkte des Einlassventils und des Auslassventils bestimmt. Liegt eine Momentänderungsaufforderung, das Moment zu erhöhen, vor, so ist der Schließzeitpunkt des Einlassventils und des Auslassventils solange verschoben, bis sich der Sollwert des Saugrohrdrucks 507 und der Sollwert des Ladedrucks 510 eingestellt haben.

Zudem weist die Steuervorrichtung einen Abgasrückführventilregler 47 auf, der mit dem Sollwertbestimmungsmodul 41 verbunden ist, um von diesem die Soll-Luftmasse 502 und des Soll-Restgasgehalt in der externen Abgasrückführung zu empfangen. Der Abgasrückführventilregler 57 ist dazu ausgebildet, eine Soll-Stellung des Abgasrückführventils zu bestimmen und das Abgasrückführventil 404 entsprechend zu steuern (Bezugszeichen 513).

In manchen Ausführungsbeispielen ist die Steuervorrichtung als ein gemeinsamer Prozessor ausgebildet, der die Funktionen des Sollwertbestimmungsmoduls 41, des Saugrohrdruckbestimmungsmoduls 42, des Soll-Ladedruckbestimmungsmoduls 44 und des Zeitpunktbestimmungsmoduls 46 ausführt.

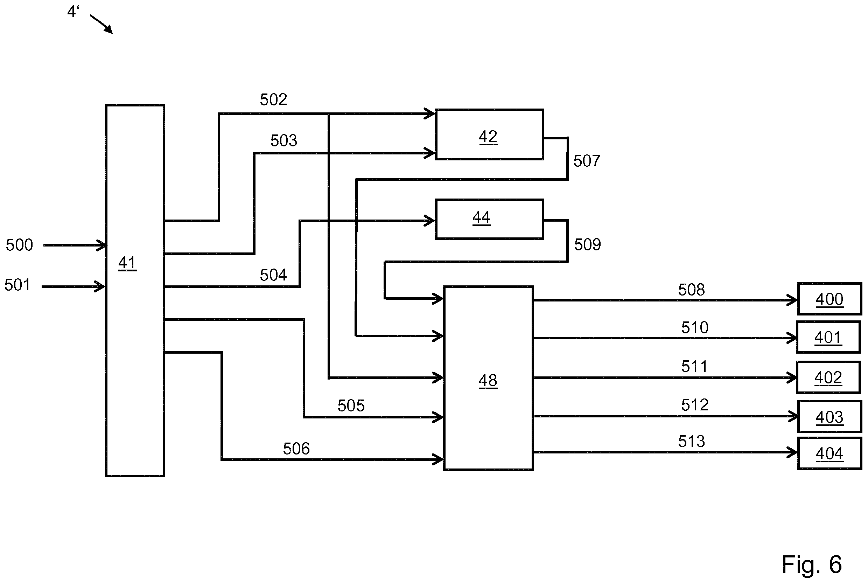

Fig. 6 zeigt ein alternatives Ausführungsbeispiel einer Verbrennungskraftmaschine. Die Verbrennungskraftmaschine 4' enthält eine Steuervorrichtung. Die Steuereinrichtung enthält wie die Steuervorrichtung in Fig. 5 ein Sollwertbestimmungsmodul 41, eine Saugrohrdruckbestimmungsvorrichtung 42 und ein Soll-Ladedruckbestimmungsmodul 44. Die Steuervorrichtung weist weiterhin ein Bearbeitungsmodul 48 auf, das auf Grundlage der aktuellen Drehzahl 500, des Sollwertmoments 501, der Soll-Luftmasse 502, des Soll-Liefergrads 503, des Soll-Druckvorhalts 504, des Soll-Restgasgehalts 505 der internen Abgasrückführung, des Soll-Restgasgehalt 506 der externen Abgasrückführung, des Sollsaugrohrdrucks 507 und des Sollladedrucks 509 die Stellung von füllungsbeeinflussenden Stellelementen, d.h. der Drosselklappe 400, des Turboladers 401, des Einlassventils 402, des Auslassventils 403 und des Abgasrückführventils 404, bestimmt und diese entsprechend regelt.

Zum Bestimmen der Stellung der Stellelemente werden Streckenmodelle gebildet, die beschreiben, wie der Saugrohrdruck von der Stellung der Drosselklappe 400 beeinflusst wird, wie der Ladedruck durch den Abgasturbolader 401, d.h. einen Steller der Abgasturboladers, beeinflusst wird, wie die Stellelemente auf Änderungen ihrer Stellung reagieren und wie die Frischluftmassen und der Gehalt des internen Restgases von den Stellungen des Einlassventils 402 und des Auslassventils 403 abhängen. Um den Einfluss des Einlassventils und des Auslassventils auf die Frischluftmasse und den Restgasgehalt der inneren Abgasrückführung zu bestimmen, können Füllungserfassungsmodelle herangezogen werden.

Auf Basis der Streckenmodelle werden anschließend die Stellelemente eingestellt über die Signale 508, 510, 511, 512 und 513. Die Einstellung des Einlassventils und gegebenenfalls des Auslassventils erfolgt dadurch, dass zusätzlich zur Einstellung des Saugrohrdrucks durch die Drosselklappe die Füllungszusammensetzung bei Momentänderungsaufforderung optimiert wird, indem die Schließzeitpunkte des Einlassventils und gegebenenfalls des Auslassventils zeitlich verschoben werden, um schneller als auf Grundlage des Stellung der Drosselklappe auf eine Momentänderungsaufforderung reagieren zu können.

Zusammenfassend zeichnet sich die vorliegende Erfindung dadurch aus, dass die Füllungszusammensetzung im Zylinder durch mehrere Stellorgane beeinflusst wird und so schnell auf Momentänderungsaufforderungen reagiert werden kann.

### Bezugszeichenliste

- 10: Verfahren zum Ausführen eines Gaswechsels
- 101: laufender Steuerprozess
- 102: Erkennen einer Momentänderungsaufforderung
- 103: Bestimmen eines Sollwerts des Saugrohrdrucks
- 1040: Bestimmen einer Sollstellung der Drosselklappe
- 1041: Einstellen der Sollstellung der Drosselklappe
- 1050: Bestimmen eines variablen Zeitpunkts
- 1051: Schließen des Auslassventils zum variablen Zeitpunkt
- 1052: Feststellen, dass Sollwert des Saugrohrdrucks dem Istwert entspricht
- 106: kontinuierlicher Steuerprozess
- 2: Verbrennungskraftmaschine
- 20: Steuervorrichtung
- 201: Schnittstelle
- 202: Prozessormodul
- 2020: Sollwertbestimmungsmodul
- 2021: Zeitpunktbestimmungsmodul
- 21: Stellmodul
- 22: Schaltmodul
- 300: Momentänderungsaufforderung
- 301: Sollwert des Saugrohrdrucks
- 302: variabler Zeitpunkt
- 4: Verbrennungskraftmaschine
- 41: Sollwertbestimmungsmodul
- 42: Saugrohrdruckbestimmungsvorrichtung
- 43: Saugrohrdruckregler
- 44: Soll-Ladedruckbestimmungsmodul
- 45: Ladedruckregler
- 46: Zeitpunktbestimmungsmodul
- 47: Abgasrückführventilregler
- 400: Drosselklappe
- 401: Turbolader
- 402: Einlassventil
- 403: Auslassventil
- 404: Abgasrückführventil
- 500: Drehzahl
- 501: Sollmoment
- 502: Soll-Luftmasse
- 503: Soll-Liefergrad
- 504: Soll-Druckvorhalt
- 505: Soll-Restgasgehalt der internen Abgasrückführung
- 506: Soll-Restgasgehalt der externen Abgasrückführung
- 507: Sollsaugrohrdruck
- 508: Stellsignal für Drosselklappe
- 509: Soll-Ladedruck
- 510: Steuersignal für Turbolader
- 511: Stellsignal für Einlassventil
- 512: Stellsignal für Auslassventil
- 513: Stellsignal für Abgasrückführventil

- OT: oberer Totpunkt
- UT: unterer Totpunkt
- ÖE: Öffnungszeitpunkt des Einlassventils
- SE: Schließzeitpunkt des Einlassventils
- vSE: variabler Schließzeitpunkt des Einlassventils
- SA: Schließzeitpunkt des Auslassventils
- vSA: variabler Schließzeitpunkt des Auslassventils
- Ps: Saugrohrdruck
- ϕ: Verschiebung des variablen Schließzeitpunktes des Einlassventils zum festen Zeitpunkt
- t: Zeit

## Patentansprüche

1. Verfahren (10) zum Ausführen eines Gaswechsels in einem Zylinder einer Verbrennungskraftmaschine, wobei der Zylinder über ein Ventil mit einem Gasleitungsabschnitt verbunden ist, in dem ein Stellorgan zum Einstellen eines Gasdrucks in dem Gasleitungsabschnitt vorgesehen ist, wobei das Ventil bei gleichbleibendem Moment der Verbrennungskraftmaschine zu einem festen Zeitpunkt (SE, SA) in einem Arbeitszyklus der Verbrennungskraftmaschine schließt, mit den Schritten:
Erkennen einer Momentänderungsaufforderung (102);
Bestimmen eines Sollwerts bezüglich des Gasdrucks im Gasleitungsabschnitt in Abhängigkeit von der Momentänderungsaufforderung (103); anschließend
Bestimmen eines variablen Zeitpunktes (vSE, vSA) zum Schließen des Ventils infolge der Momentänderungsaufforderung (1050), wobei der variable Zeitpunkt (vSE, vSA) im Arbeitszyklus in Abhängigkeit vom Sollwert des Gasdrucks relativ zu dem festen Zeitpunkt (SE, SA) verschoben ist und
Steuern (1041) des Stellorgans infolge der Momentänderungsaufforderung derart, dass sich im Gasleitungsabschnitt der in Abhängigkeit von der Momentänderungsaufforderung bestimmte Sollwert des Gasdrucks einstellt.

2. Verfahren nach dem vorhergehenden Anspruch, wobei der Sollwert bezüglich des Gasdrucks mit Hilfe von Kennfeldern bestimmt wird.

3. Verfahren nach einem der vorhergehenden Ansprüche, wobei der feste Zeitpunkt (SE, SA) auf Grundlage eines Füllungserfassungsmodells bestimmt wird.

4. Verfahren nach einem der vorhergehenden Ansprüche, wobei das Ventil infolge der Momentänderungsaufforderung während eines oder mehrerer Arbeitszyklen zu dem bestimmten variablen Zeitpunkt (vSE, vSA) geschlossen wird oder wobei das Ventil infolge der Momentänderungsaufforderung in einem ersten Arbeitszyklus nach der Momentänderungsaufforderung zu dem bestimmten variablen Zeitpunkt (vSE, vSA) und in direkt nachfolgenden Arbeitszyklen zu angepassten Zeitpunkten, die zwischen dem variablen Zeitpunkt (vSE, vSA) und dem festen Zeitpunkt (SE, SA) liegen, geschlossen wird.

5. Verfahren nach einem der vorhergehenden Ansprüche, wobei das Ventil infolge der Momentänderungsaufforderung solange zu dem bestimmten variablen Zeitpunkt (vSE, vSA) oder zu angepassten Zeitpunkten, die in einem Intervall zwischen dem variablen Zeitpunkt (vSE, vSA) und dem festen Zeitpunkt (SE, SA), das den variablen Zeitpunkt (vSE, vSA) einschließt, liegen, geschlossen wird, bis ein Istwert bezüglich des Gasdrucks den Sollwert bezüglich des Gasdrucks erreicht (1052), und im Anschluss zum festen Zeitpunkt geschlossen wird (106).

6. Verfahren nach einem der vorhergehenden Ansprüche, wobei
das Ventil ein Einlassventil ist,
der Gasleitungsabschnitt ein Saugrohr ist, das über das Einlassventil mit dem Zylinder verbunden ist, und
das Stellorgan zum Einstellen eines Gasdrucks in dem Gasleitungsabschnitt eine Drosselklappe zum Einstellen eines Saugrohrdrucks in dem Saugrohr ist, die in dem Saugrohr angeordnet ist.

7. Verfahren nach einem der vorhergehenden Ansprüche 1 bis 5, wobei
das Ventil ein Auslassventil ist,
der Gasleitungsabschnitt ein Auslasskanalabschnitt ist, der über das Auslassventil mit dem Zylinder verbunden ist, und
das Stellorgan zum Einstellen eines Gasdrucks in dem Gasleitungsabschnitt ein Abgasturbolader zum Einstellen eines Abgasgegendrucks im Auslasskanalabschnitt ist, der in dem Auslasskanalabschnitt angeordnet ist.

8. Verfahren nach dem vorhergehenden Anspruch, wobei der Zylinder weiterhin über ein Einlassventil mit einem Saugrohr verbunden ist, in dem eine Drosselklappe zum Einstellen eines Saugrohrdrucks vorgesehen ist, wobei das Einlassventil bei gleichbleibendem Moment der Verbrennungskraftmaschine zu einem einlassventilbezogenen festen Zeitpunkt (SE) in dem Arbeitszyklus schließt, mit den zusätzlichen Schritten:
Bestimmen eines Sollwerts bezüglich des Saugrohrdrucks im Saugrohr in Abhängigkeit von der Momentänderungsaufforderung, und
Bestimmen eines einlassventilbezogenen variablen Zeitpunktes (vSE) zum Schließen des Einlassventils infolge der Momentänderungsaufforderung, wobei der einlassventilbezogene variable Zeitpunkt (vSE) im Arbeitszyklus in Abhängigkeit vom Sollwert des Saugrohrdrucks relativ zu dem einlassventilbezogenen festen Zeitpunkt (SE) verschoben ist.

9. Verfahren nach Anspruch 6 oder 8, wobei die Momentänderungsaufforderung eine Aufforderung zur Erhöhung des Motormoments enthält und der variable Zeitpunkt (vSE) zum Schließen des Einlassventils im Arbeitszyklus später liegt als der feste Zeitpunkt (SE).

10. Verfahren nach einem der Ansprüche 6, 8 oder 9, wobei der feste Zeitpunkt (SE) in einer Ansaugphase des Arbeitszyklus vor Erreichen eines maximalen Volumens des Zylinders liegt.

11. Verfahren nach einem der vorhergehenden Ansprüche, wobei die Verbrennungskraftmaschine zusätzliche Stellmittel zum Beeinflussen des Gaswechsels enthält, die gesteuert werden, indem ein Sollwert bezüglich der Stellung des Stellmittels in Abhängigkeit von der Momentänderungsaufforderung bestimmt wird.

12. Steuervorrichtung (20) zum Ausführen eines Gaswechsels in einem Zylinder einer Verbrennungskraftmaschine (2), gemäß dem Verfahren (10) nach einem der vorhergehenden Ansprüche, wobei der Zylinder über ein Ventil mit einem Gasleitungsabschnitt verbunden ist, in dem ein Stellorgan zum Einstellen eines Gasdrucks in dem Gasleitungsabschnitt vorgesehen ist, wobei das Ventil bei gleichbleibendem Moment der Verbrennungskraftmaschine (2) zu einem festen Zeitpunkt (SE, SA) in einem Arbeitszyklus der Verbrennungskraftmaschine (2) schließt, enthaltend:
eine Schnittstelle (201) zum Empfangen einer Momentänderungsaufforderung (300); und
ein Prozessormodul (202)
zum Bestimmen eines Sollwerts (301) bezüglich des Gasdrucks im Gasleitungsabschnitt in Abhängigkeit von der Momentänderungsaufforderung (300); und
zum anschießenden Bestimmen eines variablen Zeitpunktes (vSE, vSA) zum Schließen des Ventils infolge der Momentänderungsaufforderung (300), wobei der variable Zeitpunkt (vSE, vSA) im Arbeitszyklus in Abhängigkeit vom Sollwert (301) des Gasdrucks relativ zu dem festen Zeitpunkt (SE, SA) verschoben ist und zum Steuern des Stellorgans infolge der Momentenänderungsaufforderung derart, dass sich im Gasleitungsabschnitt der in Abhängigkeit von der Momentänderungsaufforderung bestimmte Sollwert des Gasdrucks einstellt.

13. Steuervorrichtung (20) nach dem vorhergehenden Anspruch, die weiterhin einen Speicher enthält, in dem Sollwerte (SE, SA) bezüglich des Gasdrucks im Gasleitungsabschnitt in Abhängigkeit von der Momentänderungsaufforderung (300) und/oder Informationen zur Bestimmung des variablen Zeitpunktes (vSE, vSA) in Abhängigkeit vom Sollwert (301) des Gasdrucks hinterlegt sind.

14. Verbrennungskraftmaschine (2) mit einer Steuervorrichtung (20) nach einem der Ansprüche 12 oder 13 und einem Zylinder, der über ein Ventil mit einem Gasleitungsabschnitt verbunden ist, in dem ein Stellorgan zum Einstellen eines Gasdrucks in dem Gasleitungsabschnitt vorgesehen ist, wobei das Ventil mittels der Steuereinheit so steuerbar ist, dass das Ventil bei gleichbleibendem Moment der Verbrennungskraftmaschine (2) zu einem festen Zeitpunkt (SE, SA) in einem Arbeitszyklus der Verbrennungskraftmaschine (2) schließt und dass das Ventil infolge einer Momentänderungsaufforderung (300) zu einem variablen Zeitpunkt (vSE, vSA) schließt, wobei der variable Zeitpunkt (vSE, vSA) im Arbeitszyklus in Abhängigkeit von einem Sollwert (301) des Saugrohrdrucks relativ zu dem festen Zeitpunkt (SE, SA) verschoben ist.

## Claims

1. Method (10) for carrying out a gas exchange in a cylinder of an internal combustion engine, wherein the cylinder is connected via a valve to a gas line section, in which an actuator for adjusting a gas pressure in the gas line section is provided, wherein the valve closes upon constant torque of the internal combustion engine at a fixed point in time (SE, SA) in a working cycle of the internal combustion engine, including the steps:
recognizing a torque change request (102);
determining a target value for the gas pressure in the gas line section depending on the torque change request (103); subsequently
determining a variable point in time (vSE, vSA) for closing the valve as a result of the torque change request (1050), wherein the variable point in time (vSE, vSA) is shifted in the working cycle relative to the fixed point in time (SE, SA) depending on the target value of the gas pressure, and
controlling (1041) the actuator as a result of the torque change request in such a way that the target value for the gas pressure, which is determined depending on the torque change request, sets in in the gas line section.

2. Method according to the preceding claim, wherein the target value for the gas pressure is determined with the aid of characteristic maps.

3. Method according to one of the preceding claims, wherein the fixed point in time (SE, SA) is determined on the basis of a charge detection model.

4. Method according to one of the preceding claims, wherein the valve is closed, in response to the torque change request, at the determined variable point in time (vSE, vSA) during one or multiple working cycles, or wherein the valve is closed, in response to the torque change request, at the determined variable point in time (vSE, vSA) in a first working cycle after the torque change request and, in directly subsequent engine cycles, at adapted points in time which lie between the variable point in time (vSE, vSA) and the fixed point in time (SE, SA).

5. Method according to one of the preceding claims, wherein the valve is closed, in response to the torque change request, at the determined variable point in time (vSE, vSA) or at adapted points in time, which lie in an interval between the variable point in time (vSE, vSA) and the fixed point in time (SE, SA) enclosing the variable point in time (vSE, vSA), for as long as necessary until an actual value for the gas pressure reaches (1052) the target value for the gas pressure, and is subsequently closed (106) at the fixed point in time.

6. Method according to one of the preceding claims, wherein
the valve is an intake valve,
the gas line section is an intake manifold which is connected to the cylinder via the intake valve, and
the actuator for adjusting a gas pressure in the gas line section is a throttle valve for adjusting an intake manifold pressure in the intake manifold, which throttle valve is situated in the intake manifold.

7. Method according to one of Claims 1 to 5, wherein
the valve is an exhaust valve,
the gas line section is an exhaust port section which is connected to the cylinder via the exhaust valve, and
the actuator for adjusting a gas pressure in the gas line section is an exhaust gas turbocharger for adjusting an exhaust gas back pressure in the exhaust port section, which exhaust gas turbocharger is situated in the exhaust port section.

8. Method according to the preceding claim, wherein the cylinder is also connected via an intake valve to an intake manifold in which a throttle valve is provided for adjusting an intake manifold pressure, wherein the intake valve closes upon constant torque of the internal combustion engine at an intake valve-related, fixed point in time (SE) in the working cycle, including the additional steps:
determining a target value for the intake manifold pressure in the intake manifold depending on the torque change request, and
determining an intake valve-related, variable point in time (vSE) for closing the intake valve as a result of the torque change request, wherein the intake valve-related, variable point in time (vSE) is shifted in the working cycle relative to the intake valve-related, fixed point in time (SE) depending on the target value of the intake manifold pressure.

9. Method according to Claim 6 or 8, wherein the torque change request contains a request for increasing the engine torque, and the variable point in time (vSE) for closing the intake valve lies later in the working cycle than the fixed point in time (SE).

10. Method according to one of Claims 6, 8 or 9, wherein the fixed point in time (SE) lies in an intake phase of the working cycle before a maximum volume of the cylinder is reached.

11. Method according to one of the preceding claims, wherein the internal combustion engine contains additional adjusting means for influencing the gas exchange, which are controlled by way of determining a target value for the position of the adjusting means depending on the torque change request.

12. Control device (20) for carrying out a gas exchange in a cylinder of an internal combustion engine (2), according to the method (10) according to one of the preceding claims, wherein the cylinder is connected via a valve to a gas line section, in which an actuator for adjusting a gas pressure in the gas line section is provided, wherein the valve closes upon constant torque of the internal combustion engine (2) at a fixed point in time (SE, SA) in a working cycle of the internal combustion engine (2), containing:
an interface (201) for receiving a torque change request (300) ;
and
a processor module (202)
for determining a target value (301) for the gas pressure in the gas line section depending on the torque change request (300); and
for subsequently determining a variable point in time (vSE, vSA) for closing the valve as a result of the torque change request (300), wherein the variable point in time (vSE, vSA) is shifted in the working cycle relative to the fixed point in time (SE, SA) depending on the target value (301) of the gas pressure and for controlling the actuator as a result of the torque change request in such a way that the target value for the gas pressure, which is determined depending on the torque change request, sets in in the gas line section.

13. Control device (20) according to the preceding claim, which also contains a memory in which target values (SE, SA) for the gas pressure in the gas line section are stored depending on the torque change request (300) and/or information for determining the variable point in time (vSE, vSA) depending on the target value (301) for the gas pressure.

14. Internal combustion engine (2) comprising a control device (20) according to one of Claims 12 or 13, and a cylinder which is connected via a valve to a gas line section in which an actuator is provided for adjusting a gas pressure in the gas line section, wherein the valve can be controlled by means of the control unit in such a way that the valve closes upon constant torque of the internal combustion engine (2) at a fixed point in time (SE, SA) in a working cycle of the internal combustion engine (2), and the valve closes in response to a torque change request (300) at a variable point in time (vSE, vSA), wherein the variable point in time (vSE, vSA) is shifted in the working cycle relative to the fixed point in time (SE, SA) depending on a target value (301) of the intake manifold pressure.

## Revendications

1. Procédé (10) pour réaliser un échange gazeux dans un cylindre d'un moteur à combustion interne, dans lequel le cylindre est raccordé par une soupape à une partie de conduite de gaz, dans laquelle il est prévu un organe de réglage pour le réglage d'une pression de gaz dans la partie de conduite de gaz, dans lequel la soupape se ferme, pour un couple restant constant du moteur à combustion interne, à un instant fixe (SE, SA) dans un cycle de travail du moteur à combustion interne, comprenant les étapes suivantes:
détecter une demande de changement de couple (102);
déterminer une valeur de consigne relative à la pression de gaz dans la partie de conduite de gaz en fonction de la demande de changement de couple (103); ensuite
déterminer un instant variable (vSE, vSA) pour la fermeture de la soupape suite à la demande de changement de couple (1050), dans lequel l'instant variable (vSE, vSA) est déplacé dans le cycle de travail en fonction de la valeur de consigne de la pression de gaz par rapport à l'instant fixe (SE, SA), et
commander (1041) l'organe de réglage suite à la demande de changement de couple, de telle manière que la valeur de consigne de la pression de gaz déterminée en fonction de la demande de changement de couple s'établisse dans la partie de conduite de gaz.

2. Procédé selon la revendication précédente, dans lequel on détermine la valeur de consigne relative à la pression de gaz à l'aide de diagrammes caractéristiques.

3. Procédé selon l'une quelconque des revendications précédentes, dans lequel on détermine l'instant fixe (SE, SA) comme base d'un modèle de détection de remplissage.

4. Procédé selon l'une quelconque des revendications précédentes, dans lequel on ferme la soupape suite à la demande de changement de couple pendant un ou plusieurs cycle(s) de travail à l'instant variable déterminé (vSE, vSA) ou dans lequel on ferme la soupape suite à la demande de changement de couple dans un premier cycle de travail après la demande de changement de couple à l'instant variable déterminé (vSE, vSA) et dans des cycles de travail suivants directement à des instants adaptés, qui se situent entre l'instant variable (vSE, vSA) et l'instant fixe (SE, SA).

5. Procédé selon l'une quelconque des revendications précédentes, dans lequel on ferme la soupape suite à la demande de changement de couple à l'instant variable déterminé (vSE, vSA) ou à des instants adaptés, qui se situent dans un intervalle entre l'instant variable (vSE, vSA) et l'instant fixe (SE, SA), qui inclut l'instant variable (vSE, vSA), jusqu'à ce qu'une valeur réelle relative à la pression de gaz atteigne la valeur de consigne relative à la pression de gaz (1052), et on la ferme ensuite à l'instant fixe (106).

6. Procédé selon l'une quelconque des revendications précédentes, dans lequel
la soupape est une soupape d'admission,
la partie de conduite de gaz est une tubulure d'aspiration, qui est raccordée au cylindre au moyen de la soupape d'admission, et
l'organe de réglage pour le réglage de la pression de gaz dans la partie de conduite de gaz est un clapet d'étranglement pour le réglage d'une pression de tubulure d'aspiration dans la tubulure d'aspiration, qui est disposé dans la tubulure d'aspiration.

7. Procédé selon l'une quelconque des revendications précédentes 1 à 5, dans lequel
la soupape est une soupape d'échappement,
la partie de conduite de gaz est une partie de canal d'échappement, qui est raccordée au cylindre par la soupape d'échappement, et
l'organe de réglage pour le réglage d'une pression de gaz dans la partie de conduite de gaz est un turbocompresseur à gaz d'échappement pour le réglage d'une contrepression de gaz d'échappement dans la partie de canal d'échappement, qui est disposé dans le canal de gaz d'échappement.

8. Procédé selon la revendication précédente, dans lequel le cylindre est en outre raccordé par une soupape d'admission à une tubulure d'aspiration, dans laquelle il est prévu un clapet d'étranglement pour le réglage d'une pression de tubulure d'aspiration, dans lequel la soupape d'admission se ferme, pour un couple restant constant du moteur à combustion interne, à un instant fixe relié à la soupape d'admission (SE) dans le cycle de travail, comprenant en plus les étapes suivantes:
déterminer une valeur de consigne relative à la pression de tubulure d'aspiration dans la tubulure d'aspiration en fonction de la demande de changement de couple, et
déterminer un instant variable relié à la soupape d'amission (vSE) pour la fermeture de la soupape d'admission suite à la demande de changement de couple, dans lequel l'instant variable relié à la soupape d'admission (vSE) est déplacé dans le cycle de travail en fonction de la valeur de consigne de la pression de tubulure d'aspiration par rapport à l'instant fixe relié à la soupape d'admission (SE).

9. Procédé selon la revendication 6 ou 8, dans lequel la demande de changement de couple contient une demande d'augmentation du couple du moteur et l'instant variable (vSE) pour la fermeture de la soupape d'admission est situé plus tard que l'instant fixe (SE) dans le cycle de travail.

10. Procédé selon une des revendications 6, 8 ou 9, dans lequel l'instant fixe (SE) se situe dans une phase d'aspiration du cycle de travail avant d'atteindre un volume maximal du cylindre.

11. Procédé selon l'une quelconque des revendications précédentes, dans lequel le moteur à combustion interne comporte des moyens de réglage supplémentaires pour influencer l'échange gazeux, que l'on commande en déterminant une valeur de consigne relative à la position du moyen de réglage en fonction de la demande de changement de couple.

12. Dispositif de commande (20) pour réaliser un échange gazeux dans un cylindre d'un moteur à combustion interne (2), conformément au procédé (10) selon l'une quelconque des revendications précédentes, dans lequel le cylindre est raccordé par une soupape à une partie de conduite de gaz, dans laquelle il est prévu un organe de réglage pour le réglage d'une pression de gaz dans la partie de conduite de gaz, dans lequel la soupape se ferme, pour un couple restant constant du moteur à combustion interne (2), à un instant fixe (SE, SA) dans un cycle de travail du moteur à combustion interne (2), comprenant:
une interface (201) pour recevoir une demande de changement de couple (300); et
un module de processeur (202)
pour déterminer une valeur de consigne (301) relative à la pression de gaz dans la partie de conduite de gaz en fonction de la demande de changement de couple (300); et
pour déterminer ensuite un instant variable (vSE, vSA) pour la fermeture de la soupape suite à la demande de changement de couple (300), dans lequel l'instant variable (vSE, vSA) est déplacé dans le cycle de travail en fonction de la valeur de consigne (301) de la pression de gaz par rapport à l'instant fixe (SE, SA) et pour commander l'organe de réglage suite à la demande de changement de couple de telle manière que la valeur de consigne de la pression de gaz déterminée en fonction de la demande de changement de couple s'établisse dans la partie de conduite de gaz.

13. Dispositif de commande (20) selon la revendication précédente, qui comporte en outre une mémoire, dans laquelle sont stockées des valeurs de consigne (SE, SA) relatives à la pression de gaz dans la partie de conduite de gaz en fonction de la demande de changement de couple (300) et/ou des informations pour la détermination de l'instant variable (vSE, vSA) en fonction de la valeur de consigne (301) de la pression de gaz.

14. Moteur à combustion interne (2) équipé d'un dispositif de commande (20) selon une des revendications 12 ou 13 et d'un cylindre, qui est raccordé par une soupape à une partie de conduite de gaz, dans laquelle il est prévu un organe de réglage pour le réglage d'une pression de gaz dans la partie de conduite de gaz, dans lequel la soupape peut être commandée au moyen de l'unité de commande, de telle manière que la soupape se ferme, pour un couple restant constant du moteur à combustion interne (2), à un instant fixe (SE, SA) dans un cycle de travail du moteur à combustion interne (2) et que la soupape se ferme à un instant variable (vSE, vSA) suite à une demande de changement de couple (300), dans lequel l'instant variable (vSE, vSA) est déplacé dans le cycle de travail en fonction d'une valeur de consigne (301) de la pression de tubulure d'aspiration par rapport à l'instant fixe (SE, SA).
